# EUROPÄISCHE PATENTSCHRIFT

(11) **EP 1 430 376 B1**
(45) Veröffentlichungstag und Bekanntmachung des Hinweises auf die Patenterteilung: **23.03.2005**
(21) Anmeldenummer: 02762274.5
(22) Anmeldetag: 16.05.2002
(51) Int. Cl.: G06F 1/00

(54) **VERHINDERN DER UNERWUENSCHTEN EXTERNEN ERFASSUNG VON OPERATIONEN IN INTEGRIERTEN DIGITALSCHALTUNGEN**
PREVENTION OF UNDESIRED EXTERNAL DETECTION OF OPERATIONS IN INTEGRATED DIGITAL CIRCUITS
DISPOSITIF PERMETTANT D'EMPECHER DES DETECTIONS EXTERIEURES INDESIRABLES D'OPERATIONS DANS DES CIRCUITS NUMERIQUES INTEGRES

(30) Priorität: 13.06.2001 DE 10128573
(43) Veröffentlichungstag der Anmeldung: 23.06.2004
(73) Patentinhaber: Infineon Technologies AG, 81669 München (DE)
(72) Erfinder: ECKSTEIN, Gernot, 82024 Taufkirchen (DE); AUMUELLER, Christian, 82362 Weilheim (DE); WALLSTAB, Stefan, 81739 München (DE)
(74) Vertreter: Zinkler, Franz, Dipl.-Ing.
(86) Internationale Anmeldenummer: PCT/EP2002/005428
(87) Internationale Veröffentlichungsnummer: WO 2002/101520

(56) Entgegenhaltungen:
- DE-A- 19 828 936
- US-A- 5 944 833
- O. KÖMMERLING, M.KUHN: "Design Principles for Tamper-REsistant Smartcard Processors" USENIX, [Online] 11. Mai 1999 (1999-05-11), XP002251934 Gefunden im Internet: <URL:http://www.usenix.org/events/smartcar d99/full_papers/kommerling/kommerling.pdf > [gefunden am 2003-08-21]

## Beschreibung

Die vorliegende Erfindung befaßt sich mit einem Verfahren zum Verhindern des externen Erfassens von Operationen in einer integrierten Digitalschaltung sowie mit einer integrierten Digitalschaltung, bei der das unerwünschte externe Erfassen von Operationen innerhalb der integrierten Digitalschaltung verhindert wird. Insbesondere befaßt sich die vorliegende Erfindung mit einer Gegenmaßnahme gegen sogenannte Side-Channel-Attacken, wie sie zum Zweck der Analyse von integrierten Digitalschaltung durchgeführt werden.

Bei vielen integrierten Digitalschaltungen muß verhindert werden, daß deren Betriebsweise von unberechtigten Personen analysiert wird. Beispielhafte Schaltungen, bei denen derartige Angriffsszenarien abzuwehren sind, sind Chipkarten-ICs, Sicherheits-ICs oder auch einzelne Schaltungsmodule derartiger ICs, wie beispielsweise Kryptocoprozessoren. Es bedarf keiner Erläuterung, daß es verhindert werden muß, daß unberechtigte Personen die von einem Kryptocoprozessor durchgeführten Verschlüsselungsalgorithmen analysiert.

Typischen Angriffsszenarien, mit denen unberechtigte Personen versuchen, beispielsweise die von einem Kryptocoprozessor ausgeführten Verschlüsselungsalgorithmen zu analysieren, werden als sogenannte Side-Channel-Attacken bezeichnet. Derartige Side-Channel-Attacken umfassen beispielsweise die differenzielle Leistungsaufnahmeanalyse (DPA = differential power analysis), die Erfassung der elektromagnetischen Abstrahlung des betreffenden ICs oder sogenannte Timing-Attacken.

Im Gegensatz zu synchronen Schaltungen haben asynchrone Schaltungen, zu denen auch selbst-zeitgebende Schaltungen (self-timed Schaltungen) zählen, die vorteilhafte Eigenschaft, daß ihre Verarbeitung nicht mit einem zeitlich periodischen Ereignis, wie dem Takt, direkt korreliert ist. Daher zeigt ihre Verarbeitung auch keine Abhängigkeit von einem derartigen zeitlich-periodischen Ereignis, wodurch es bei den asynchronen Schaltungen schwieriger ist, erfolgreiche Side-Channel-Attacken durchzuführen. Jedoch hängt auch bei asynchronen Schaltungen im allgemeinen die Zahl der schaltenden Elemente von der speziellen, zu verarbeitenden Operation ab, so daß generell Datenabhängigkeiten der Verarbeitung auftreten, die sich im Profil der Stromaufnahme der betreffenden Schaltung wieder erkennen lassen.

Um derartige Attacken zu erschweren, ist es bekannt, in den Verarbeitungsablauf sogenannte Random-Wait-States also zufällige Wartezustände einzufügen. Ebenfalls ist es bekannt, Unterbrechungen der Ausführung von Operationen in der CPU zu erzwingen. Bei der Einfügung der Random-Wait-States sind mögliche Variationen des zeitlichen Ablaufs der Operationen begrenzt, da nicht zu jedem beliebigen Zeitpunkt eine Verzögerung aktiviert werden kann bzw. ein Wartezustand eingefügt werden kann. Auch die Maßnahme der Unterbrechung in der Ausführung in der CPU kann die Side-Channel-Attacken nicht vollständig abwehren, da sich derartige Unterbrechungen durch die veränderte Stromaufnahme erfassen lassen.

Aus US 5,944,833 A ist es bereits bekannt, den Ausführungszeitpunkt von Programmen oder Befehlen innerhalb einer synchronen Schaltung dadurch vom Schaltungstakt oder von den auftretenden Befehlen zu entkorrelieren, indem Sequenzen der Taktpulssignale zu zufälligen Zeitpunkten ausgegeben werden oder Unterbrechungsbefehle zufällig erzeugt werden oder indem sekundäre Befehlssequenzen ausgeführt werden, um auf diese Weise ein Entkorrelieren zu bewirken.

Ausgehend von diesem Stand der Technik liegt der vorliegenden Erfindung die Aufgabe zugrunde, ein Verfahren zum Verhindern des externen Erfassens von Operationen in einer integrierten Digitalschaltung, die eine asynchrone Schaltung aufweist, zu schaffen.

Ferner liegt der Erfindung die Aufgabe zugrunde, eine integrierte Digitalschaltung, die eine asynchrone Schaltung hat, so weiterzubilden, daß das unerwünschte externe Erfassen von Operationen in der Digitalschaltung verhindert wird.

Die erstgenannte Aufgabe wird durch ein Verfahren nach Anspruch 1 gelöst.

die zweitgenannte Aufgabe wird durch eine integrierte Schaltung nach Anspruch 3 gelöst.

Die Erfindung schafft ein Verfahren zum Verhindern des externen Erfassens von Operationen in eine integrierte Schaltung, die eine asynchrone Schaltung aufweist, mit dem Verfahrensschritt des zeitlichen Veränderns einer Versorgungsspannung der asynchronen Schaltung, um den Ausführungszeitpunkt von Operationen innerhalb der asynchronen Schaltung zeitlich zu verschieben. Bei einem bevorzugten Aspekt der Erfindung erfolgt die Veränderung der Versorgungsspannung in zufälliger Weise.

Der Erfindung liegt die Erkenntnis zugrunde, daß durch Überlagerung eines zufallsgesteuerten, also unvorhersehbaren zeitlichen Jitters über die Versorgungsspannung ein zufälliger zeitlicher Jitter bei den Ausführungszeiten der Operationen erreicht wird, wodurch ein Aufsynchronisieren der Einzelmessungen bei den Side-Channel-Attacken verhindert wird. Der zeitliche Jitter bei der Ausführung der Operationen innerhalb der asynchronen Schaltung führt jedoch nicht Verarbeitungsfehlern, da asynchrone Schaltungen ihrer Natur nach eine Selbstsynchronisation bewirken.

Gemäß einem Vorrichtungsaspekt der Erfindung umfaßt die integrierte Digitalschaltung eine asynchrone Schaltung und eine Einrichtung zum zeitlichen Verändern der Versorgungsspannung, mit der die asynchrone Schaltung versorgt wird, wodurch der Ausführungszeitpunkt von Operationen innerhalb der asynchronen Schaltung zeitlich verschoben wird.

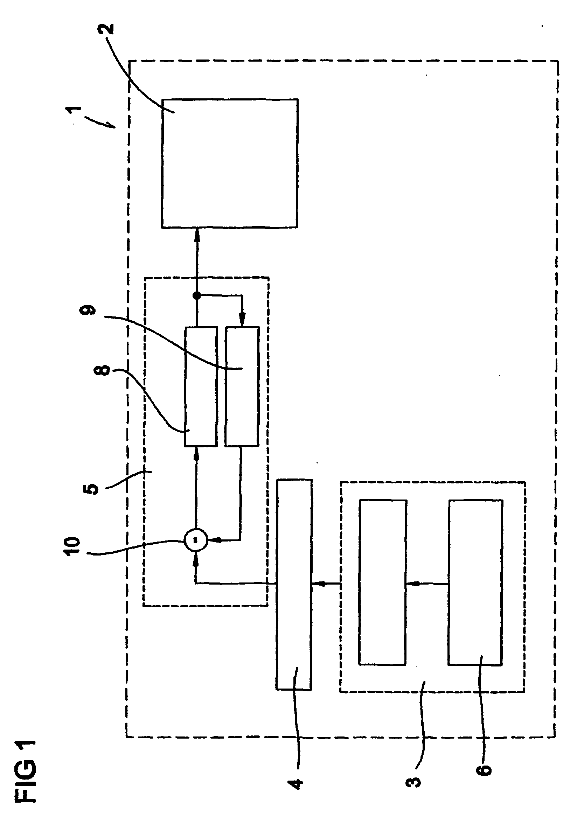

Nachfolgend wird ein bevorzugtes Ausführungsbeispiel der vorliegenden Erfindung unter Bezugnahme auf die beiliegende Zeichnung näher erläutert. Es zeigt:

Die einzige Figur ein Blockdiagramm einer integrierten Digitalschaltung gemäß einem bevorzugten Ausführungsbeispiel der Erfindung.

Die erfindungsgemäße integrierte Digitalschaltung, die in ihrer Gesamtheit mit dem Bezugszeichen 1 bezeichnet ist, umfaßt eine asynchrone Schaltung 2, eine Generatorschaltung 3 zum Erzeugen tatsächlicher Zufallszahlen (true random number generator), einen Digital/Analog-Wandler 4, dem eingangsseitig die von der Generatorschaltung erzeugten digitalen Zufallszahlen zugeführt werden und der ausgangsseitig einen entsprechenden analogen Sollspannungswert erzeugt, sowie einen Spannungsregler 5, dem eingangsseitig der analoge Soll-Spannungswert vom Digital/Analog-Wandler 4 zugeführt wird und der ausgangsseitig einen Ist-Spannungswert erzeugt, der die Versorgungsspannung der asynchronen Schaltung 2 bildet. Die Generatorschaltung 3 zur Erzeugung tatsächlicher Zufallszahlen umfaßt ihrerseits eine Rauschquelle 6, die eine Rauschspannung erzeugt, sowie einen von der Rauschquelle 6 angesteuerten Zufallszahlengenerator 7.

Anstelle der hier gezeigten Kombination der Rauschquelle 6 und des Zufallszahlengenerators 7 können jedoch beliebige andere Zufallsgeneratoren zum Erzeugen der Zufallszahlen als Eingangsgröße für den Digital/Analog-Wandler 4 verwendet werden.

Bei dem hier gezeigten bevorzugten Ausführungsbeispiel hat der Spannungsregler 5 ein Stellglied 8, eine Istwerterfassungsvorrichtung 9 und eine Differenzbildungsvorrichtung 10, deren Eingängen einerseits der analoge Sollspannungswert vom Digital/Analog-Wandler 4 und andererseits ein Ausgangssignal von der Istwerterfassungsvorrichtung 9 zugeführt werden.

Die Generatorschaltung 3, der Digital/Analog-Wandler 4 und der Spannungsregler 5 bilden miteinander eine Einrichtung zum zufälligen zeitlichen Verändern der Versorgungsspannung bzw. einer Einrichtung zum Überlagern eines zufälligen zeitlichen Jitters über die Versorgungsspannung, mit der die asynchrone Schaltung 2 versorgt wird. Aufgrund der sich zufällig ändernden Versorgungsspannung kommt es zu einem zufälligen zeitlichen Jitter bei der Ausführung der Operationen in der asynchronen Schaltung, wodurch das Aufsynchronisieren der Einzelmessungen bei den sogenannten Side-Channel-Attacken verhindert oder zumindest erschwert wird.

### Bezugszeichenliste

- 1: Digitalschaltung
- 2: asynchrone Schaltung
- 3: Generatorschaltung
- 4: Digital/Analog-Wandler
- 5: Spannungsregler
- 6: Rauschquelle
- 7: Zufallszahlengenerator
- 8: Stellglied
- 9: Istwerterfassungsvorrichtung
- 10: Differenzbildungsvorrichtung

## Patentansprüche

1. Verfahren zum Verhindern des externen Erfassens von Operationen in einer integrierten Digitalschaltung (1), die eine asynchrone Schaltung (2) aufweist,
mit dem Verfahrensschritt des zeitlichen Veränderns einer Versorgungsspannung der asynchronen Schaltung (2), um den Ausführungszeitpunkt von Operationen innerhalb der asynchronen Schaltung zeitlich zu verschieben.

2. Verfahren nach Anspruch 1, bei dem die zeitliche Veränderung der Versorgungsspannung in zufälliger Weise erfolgt.

3. Integrierte Digitalschaltung, mit
einer asynchronen Schaltung (2), und
einer Einrichtung (3, 4, 5) zum zeitlichen Verändern einer Versorgungsspannung der asynchronen Schaltung 2, um den Ausführungszeitpunkt von Operationen innerhalb der asynchronen Schaltung (2) zeitlich zu verschieben.

4. Integrierte Digitalschaltung nach Anspruch 3, bei der die Einrichtung (3, 4, 5) zum zeitlichen Verändern der Versorgungsspannung einen Zufallszahlengenerator (7) aufweist.

5. Integrierte Digitalschaltung nach Anspruch 4, bei der die Einrichtung (3, 4, 5) zum zeitlichen Verändern der Versorgungsspannung ferner eine Rauschspannungsquelle (6) aufweist, die den Zufallszahlengenerator (7) ansteuert.

6. Integrierte Digitalschaltung nach Anspruch 4 oder 5, bei der die Einrichtung (3, 4, 5) zum zeitlichen Verändern der Versorgungsspannung ferner einen Digital/Analog-Wandler (4) aufweist, der die vom Zufallszahlengenerator (7) erzeugten Digitalwerte in eine Analogspannung umwandelt.

7. Integrierte Digitalschaltung nach einem der Ansprüche 3 bis 6, bei der die Einrichtung (3, 4, 5) zum zeitlichen Verändern der Versorgungsspannung ferner einen Spannungsregler (5) aufweist.

8. Integrierte Digitalschaltung nach einem der Ansprüche 3 bis 7, bei der die asynchrone Schaltung (2) zur Ausführung eines Verschlüsselungsalgorithmus ausgebildet ist.

## Claims

1. Method of preventing the external detection of operations in a digital integrated circuit (1) comprising an asynchronous circuit (2),
comprising the method step of time-varying a supply voltage of said asynchronous circuit (2) to time-shift the execution time of operations within said asynchronous circuit.

2. Method according to claim 1, wherein the time variation of said supply voltage takes place in a random way.

3. Digital integrated circuit comprising:
an asynchronous circuit (2), and
means (3, 4, 5,) for time-varying a supply voltage of said asynchronous circuit (2) to time-shift the execution time of operations within said asynchronous circuit (2).

4. Digital integrated circuit according to claim 3, wherein said means (3, 4, 5) for time-varying said supply voltage comprises a random number generator (7).

5. Digital integrated circuit according to claim 4, wherein said means (3, 4, 5) for time-varying said supply voltage further comprises a noise voltage source (6) driving said random-number generator (7).

6. Digital integrated circuit according to claim 4 or 5, wherein said means (3, 4, 5) for time-varying said supply voltage further comprises a digital-analog converter (4) transforming the digital values produced by said random-number generator (7) into an analog voltage.

7. Digital integrated circuit according to one of claims 3 to 6, wherein said means (3, 4, 5) for time-varying said supply voltage further comprises a voltage regulator (5).

8. Digital integrated circuit according to one of claims 3 to 7, wherein said asynchronous circuit (2) is formed for executing a coding algorithm.

## Revendications

1. Procédé pour faire obstacle à la détection de l'extérieur d'opérations dans un circuit numérique intégré (1) ayant un circuit asynchrone (2),
comprenant l'étape de procédé d'une modification dans le temps d'une tension d'alimentation du circuit asynchrone (2), pour décaler dans le temps l'instant de réalisation d'opérations au sein du circuit asynchrone.

2. Procédé selon la revendication 1, dans lequel la modification de la tension d'alimentation dans le temps a lieu de façon aléatoire.

3. Circuit numérique intégré, comprenant
un circuit asynchrone (2) et
un dispositif (3, 4, 5) de modification dans le temps d'une tension d'alimentation du circuit asynchrone (2), pour décaler dans le temps l'instant de réalisation d'opérations au sein du circuit asynchrone (2).

4. Circuit numérique intégré selon la revendication 3, dans lequel le dispositif (3, 4, 5) de modification dans le temps de la tension d'alimentation a un générateur de nombres aléatoires (7).

5. Circuit numérique intégré selon la revendication 4, dans lequel le dispositif (3, 4, 5) de modification dans le temps de la tension d'alimentation a en outre une source de tension de bruit (6), qui active le générateur de nombres aléatoires (7).

6. Circuit numérique intégré selon la revendication 4 ou 5, dans lequel le dispositif (3, 4, 5) de modification dans le temps de la tension d'alimentation a en outre un convertisseur numérique/analogique (4), qui transforme les valeurs numériques générées par le générateur de nombres aléatoires (7) en une tension analogique.

7. Circuit numérique intégré selon l'une quelconque des revendications 3 à 6, dans lequel le dispositif (3, 4, 5) de modification dans le temps de la tension d'alimentation a en outre un régulateur de tension (5).

8. Circuit numérique intégré selon l'une quelconque des revendications 3 à 7, dans lequel le circuit asynchrone (2) est conçu pour la réalisation d'un algorithme de codage.
